Europäisches Patentamt

(19) European Patent Office

Office européen des brevets

(11) **EP 1 039 139 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(51) Int Cl.$^7$: **F04D 27/02**

(21) Anmeldenummer: **99105065.9**

(22) Anmeldetag: **23.03.1999**

(54) **Gebläse mit vorgegebener Kennlinie**

Blower with characteristic curve

Soufflante avec une courbe caractéristique

(84) Benannte Vertragsstaaten:
**CH DE DK ES FI FR GB IT LI NL SE**

(43) Veröffentlichungstag der Anmeldung:
**27.09.2000 Patentblatt 2000/39**

(73) Patentinhaber: **ebm-papst Mulfingen GmbH & Co.KG**
**74673 Mulfingen (DE)**

(72) Erfinder:
• **Schöne, Jürgen, Dr.-Ing.**
**97980 Bad Mergentheim (DE)**
• **Schneeweiss, Hartmut, Dipl.-Ing.**
**97980 Bad Mergentheim (DE)**
• **Reinhardt, Wilhelm**
**74575 Schrozberg-Gütbach (DE)**

(74) Vertreter: **Patentanwälte Dr. Solf & Zapf**
**Candidplatz 15**
**81543 München (DE)**

(56) Entgegenhaltungen:
**WO-A-92/00492    WO-A-98/04835**
**DE-U- 29 516 268    US-A- 4 806 833**
**US-A- 4 978 896    US-A- 5 019 757**
**US-A- 5 736 823**

**Beschreibung**

Die vorliegende Erfindung betrifft ein Gebläse bestehend aus einem von einem Elektromotor angetriebenen Gebläserad, wobei der Elektromotor mittels einer Regeleinheit in bezug auf seine Drehzahl regelbar ist ein Beispiel ist im Dokument WO-A-92/00492 beschrieben.

Aus der US-A-5,019,757 ist eine Steuerung von einem Elektromotor für ein Gebläse bekannt, das einen konstanten Gegendruck liefert. Aus dem Motormoment und Drehzahlsignal und einem vorgegebenen Strömungsdruck des Gebläses wird eine Solldrehzahl bestimmt, die über einen Regelalgorithmus erreicht wird.

Aus der US-A-4,978,896 ist eine Steuerung für einen Elektromotor für ein Gebläse bekannt, das einen konstanten Volumenstrom liefert. Aus dem Drehmoment und dem Drehzahlsignal des Motors und aus einem vorgegebenen Volumenstrom wird die Solldrehzahl bestimmt, die über einen Regelalgorithmus erreicht wird.

Aus der US-A-4,806,833 ist eine Steuerung für einen Elektromotor für ein Gebläse bekannt, das einen konstanten Volumenstrom liefert, wobei mittels eines Regelalgorithmus auf der Basis eines vorgegebenen Volumenstroms und der Drehzahl eine Solldrehzahl bestimmt wird.

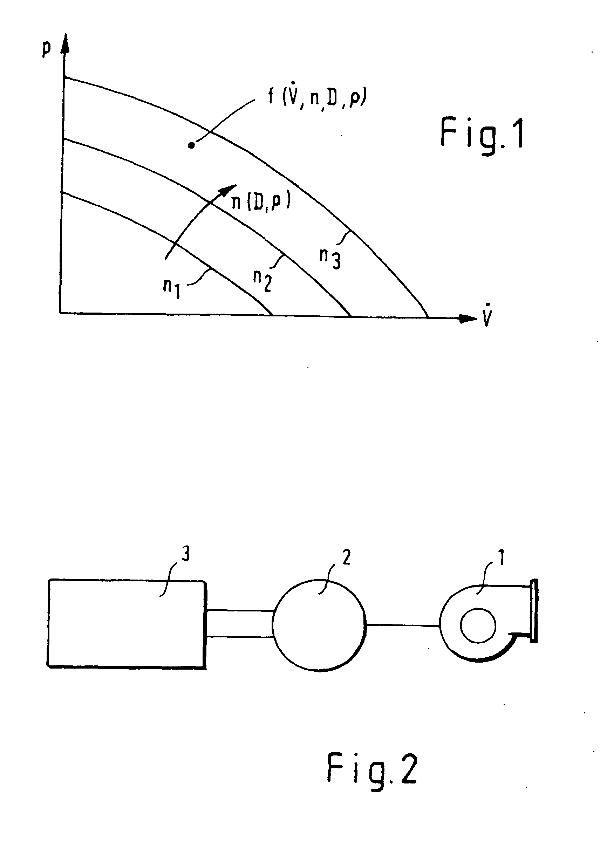

Ein Gebläse besteht aus einem Laufrad, das sich angetrieben durch einen Elektromotor mit einer Drehzahl n dreht. Das Gebläse hat die Aufgabe, ein Medium mit einer Dichte $\rho$ mit einem Volumenstrom $\dot{V}$ gegen einen Gegendruck $\rho$ zu fördern. Die Größen p, $\dot{V}$, n und weitere elektrische Größen des Motors werden auf einer Luftmeßstrecke gemessen. Die Darstellung des Gegendrucks über den Volumenstrom wird in einer sogenannten Luftleistungskennlinie p = f ($\dot{V}$), siehe Fig. 1, dargestellt. Bei einem konventionellen Gebläse ohne Drehzahlregelung stellt sich am Laufrad die Drehzahl ein, bei der das Abgabedrehmoment des Motors gleich dem Aufnahmedrehmoment des Laufrades ist. Die in Fig. 1 dargestellte Luftleistungskennlinien sind für jeweils eine bestimmte Drehzahl aufgenommen. Werden unterschiedliche Drehzahlen zugrundegelegt, so kann für jede Drehzahl eine bestimmte Kennlinie gemessen werden, so daß für ein spezielles Gebläse ein ganzes Kenn-linienfeld erzeugt werden kann. Derartige Kennlinienfelder können aber auch für unterschiedliche Radgrößen erstellt werden bzw. für unterschiedliche Dichten des zu fördernden Mediums.

Bei einem Gebläse mit einer sogenannten "künstlichen" Kennlinie soll das Gebläse eine vorgegebene p($\dot{V}$)-Kennlinie erreichen. Hierzu ist eine Regelung der Drehzahl genau so durchzuführen, daß sich diese vorgegebene Luftleistungskennlinie ergibt. Eine solche Regelung läßt sich relativ einfach realisieren, wenn die Größen p und/oder $\dot{V}$ direkt am Gebläse gemessen werden. Hierzu ist aber eine aufwendige Messung mittels teurer Druck- und/oder Volumenstromsonden notwendig.

Ausgehend von dem bekannten Stand der Technik, bei dem nur eine bestimmte Kennlinie einstellbar ist, liegt der vorliegenden Erfindung die Aufgabe zugrunde, ein Gebläse zur Verfügung zu stellen, bei dem mittels der Messung von Motorparametern, elektrischen Größen und der Drehzahl jede beliebige künstliche Kennlinie durch Regelung der Drehzahl gefahren werden kann.

Erfindungsgemäß wird dies bei einem Gebläse der eingangs beschriebenen Art dadurch erreicht, indem ein Istsignal entsprechend einer Istdrehzahl des Gebläses gemessen und mit einem einer Solldrehzahl entsprechenden Sollsignal verglichen wird und mittels der Regeleinheit die Istdrehzahl auf die Solldrehzahl geregelt wird, wozu die Istdrehzahl $n_a$ und ein aktueller Motorstrom $I_a$ oder ein Zuleitungsstrom $I_b$ gemessen werden und auf einen Mikrocontroller als Eingangssignalgrößen geführt werden, und im Mikrocontroller als Vorgabewerte die gebläsespezifischen Daten wie Raddurchmesser, Dichte des Fördermediums, Gebläsekoeffizienten und Motorkoeffizienten sowie eine Gebläse-Sollkennlinie p = f ($\dot{V}_s$) gespeichert sind und im Mikrocontroller das von den elektrischen Stromgrößen $I_a$ oder $I_b$ und der Istdrehzahl $n_a$ abhängige Solldrehzahlsignal $n_s$ auf der Basis der vorgegebenen künstlichen Kennlinie $p_s = f (\dot{V}_s)$ erzeugt wird, mit $p_s$ = Sollbetriebsdruck und $V_s$ = Sollvolumenstrom.

Die vorliegende Erfindung wird anhand der folgenden Figuren im einzelnen erläutert. Es zeigen:

Fig. 1    das Kennlinienfeld mit Druck-Volumenstromkennlinien eines Gebläses bekannter Bauart,

Fig. 2    ein Prinzipschaltbild eines erfindungsgemäßen Gebläses,

Fig. 3    ein Blockschaltbild des Gebläses gemäß Fig. 2,

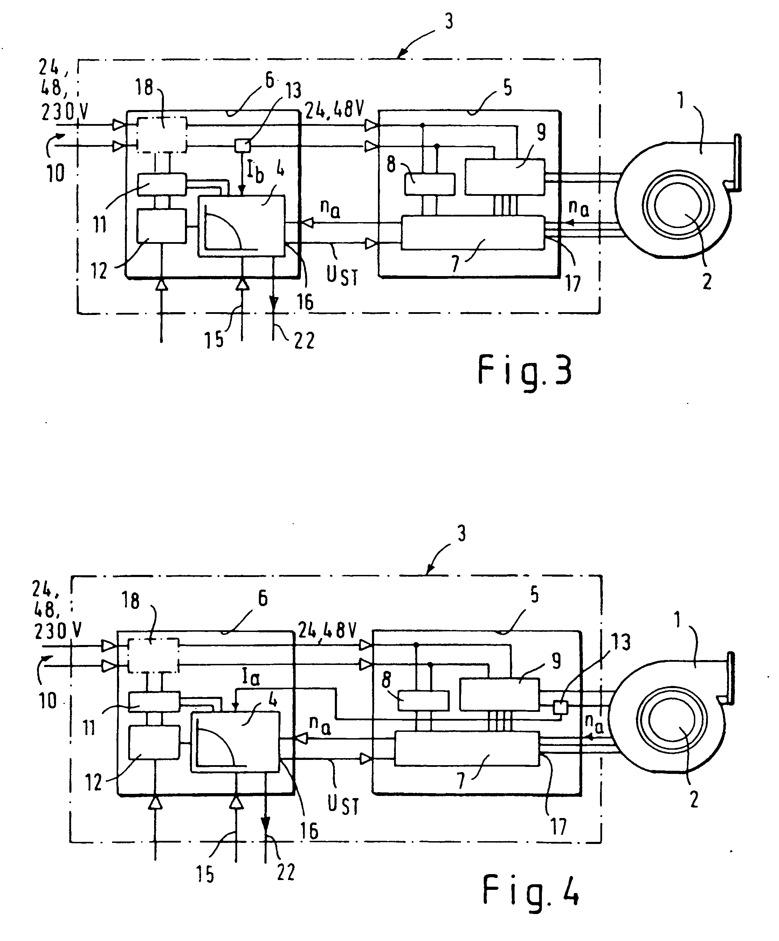

. Fig. 4    ein Blockschaltbild des Gebläses gemäß Fig. 2 mit einer zu Fig. 3 alternativen Strommessung,

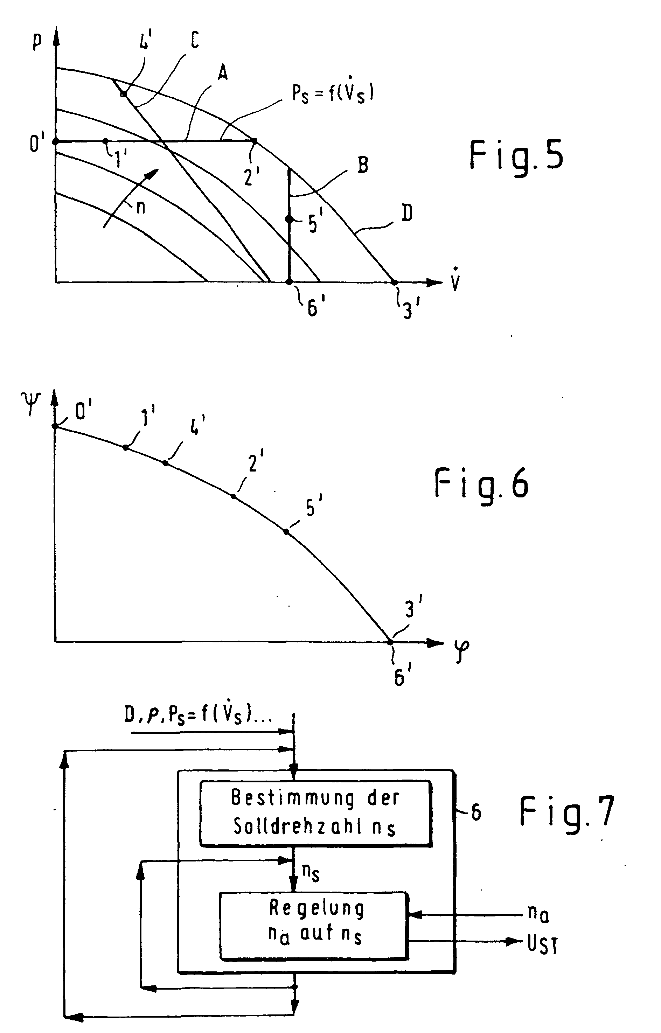

Fig. 5    ein Kennlinienfeld gemäß Fig. 1, wobei verschiedene vorgegebene künstliche Kennlinien eingezeichnet sind,

Fig. 6    eine Darstellung einer dimensionslosen Kennlinie $\Psi = f (\varphi)$, entsprechend dem erfindungsgemäßen Algorithmus sowie

Fig. 7      ein Prinzipschaltbild der erfindungsgemäßen Regelung.

Ein erfindungsgemäßes Gebläse besteht, wie in Fig. 2 dargestellt ist, aus einem Gebläseteil 1, das ein Gebläserad mit mehreren Schaufeln aufweist. Das Gebläserad läuft z. B. in einem Gehäuse mit einer oder mehreren Ansaug- und Ausblasöffnungen. Das Gebläserad wird vorzugsweise von einem elektronisch kommutierten Gleichstrommotor 2 angetrieben. Dieser Motor 2 wird von einer elektronischen Regeleinheit 3 angesteuert, die sowohl die Motorfunktionen als auch die Regelfunktionen zur Verwirklichung einer künstlichen Gebläse-Kennlinie realisiert, wie dies erfindungsgemäß möglich ist. Diese Regeleinheit 3 besitzt unter anderem einen Mikrocontroller 4, siehe Figur 3, 4. Wie aus Fig. 3 bzw. 4 erkennbar ist, besitzt die Regeleinheit 3 zwei Steuerungsbausteine, und zwar einerseits eine Motorelektronik 5, mit der der Betrieb des Motors erfolgt und ein Gebläseregelungsmodul 6. Die Motorelektronik 5 und das Gebläseregelungsmodul 6 weisen je eine Schnittstelle auf, über die sie miteinander verbunden sind. Innerhalb der Motorelektronik 5 ist ein Netzteil 8 zur Spannungsversorgung der Steuerelektronik 7 vorhanden und eine Endstufe 9 für die Ansteuerung der Motorwicklung des Motors 2. Sowohl das Netzteil als auch die Endstufe 9 sind mit einem Spannungseingang 10 verbunden, der beispielsweise eine Eingangsspannung von 24 V, 28 V Gleichspannung oder 230 V Wechselspannung aufweisen kann. Die Spannungsversorgung für das Netzteil 8 und die Endstufe 9 beträgt vorzugsweise 24 V oder 48 V.

Innerhalb des Gebläseregelungsmoduls 6 ist wiederum ein Netzteil 11 vorhanden, zur Spannungsversorgung des Mikroprozessors 4 sowie eines EEPROM-Bauteils 12. Weiterhin ist innerhalb des Gebläseregelmoduls 6 oder in einem separaten Bauteil ein Stromsensor 13 angeordnet, der den aktuellen Strom $I_b$ in der Zuleitung 2 mißt und auf den Mikroprozessor 4 als Ist-Größe führt. Weiterhin wird dem Mikroprozessor 4 von der Steuerelektronik 7 kommend die aktuelle Drehzahl $n_a$ als Drehzahlsignalwert zugeführt.

Weiterhin besitzt das Gebläseregelungsmodul 6 einen Steuereingang 15, über den eine bestimmte künstliche Gebläsekennlinie eingegeben werden kann. Aus den gebläsespezifischen Daten, wie Raddurchmesser, Dichte des Fördermediums, Gebläse- und Motorkoeffizienten, den intern gemessenen Größen des Motors sowie der vorgegebenen Gebläsesollkennlinie $p_s = f(\dot{V}_s)$ errechnet der Mikrocontroller 4 die Solldrehzahl $n_s$.

Im Mikrocontroller 4 ist u. a. ein PI oder PID-Regler realisiert, der über die Schnittstelle die Drehzahlregelung des Gebläsemotors über die Motorelektronik 5 durchführt. Hierbei handelt es sich um eine Regelung, die auf träge Regelkreise abgestimmt ist. Über einen Ausgang 16 des Mikroprozessors wird als Steuergröße ein Steuersignal $U_{ST}$ zum Erreichen der gewünschten Soll-Drehzahl $n_s$ auf die Steuerelektronik 7 geführt. Zusätzlich kann über eine Schnittstelle 22 der aktuelle Arbeitspunkt $p_a$, $\dot{V}_a$ des Gebläses ausgegeben werden.

Die Steuerelektronik 7 weist ebenfalls einen Eingang 17 für ein Istwertsignal der aktuellen Drehzahl $n_a$ des Gebläserades des Gebläses auf, das mittels einer üblichen Hall-Sensortechnik erfaßt wird. Für den Fall, daß der Spannungseingang 10 auf 230 V Wechselspannung liegt, ist zwischen Netzteil 11 und Netzteil 8 bzw. Endstufe 9, z. B. innerhalb des Mikroprozessormoduls beispielsweise ein Schaltnetzteil 18 (gestrichelt eingezeichnet) vorgesehen.

Die Motorelektronik 5 und das Gebläseregelmodul 6 können auch als eine Einheit ausgeführt werden, wobei verschiedene Komponenten vereinigt werden können. So ist z. B. nur ein Netzteil erforderlich und ein einziger Microprozessor kann sowohl den Algorithmus zur Erreichung der vorgegebenen Kennlinie durchführen, als auch die erforderlichen Kommutierungssignale erzeugen.

Neben der Stromerfassung in der Zuleitung ist auch eine direkte Bestimmung des Motorstromes $I_a$ möglich. Hierzu muß am Ausgang der entsprechenden Endstufe, siehe Fig. 4, der Stromsensor 13 angeordnet werden, dessen Signal anstelle des Stromsensors 13 im Gebläseregelmodul 6 auf den Mikroprozessor 4 geführt wird. Dies hat i. w. keinen Einfluß auf die Signalverarbeitung, es ist lediglich ein geringfügig anderer, im folgenden noch beschriebener Ansatz in den Gleichungen zu berücksichtigen. Im übrigen entspricht der Aufbau der Schaltung von Fig. 4 im wesentlichen der von Fig. 3.

Die Funktion der erfindungsgemäßen Steuerung bzw. Regelung ist wie folgt:

## 1. Vorgegebene "künstliche" Kennlinie $p_s = f(\dot{V}_s)$

Die vorgegebene Kennlinie wird als linearer Verlauf im $p(\dot{V})$ - Diagramm vorgegeben, siehe Kurve C in Fig. 5.

$$p_s = a_v + b_v \cdot \dot{V}_s. \tag{1}$$

Die Größen $a_v$ und $b_v$ sind Konstanten, die abhängig von der vorgegebenen Kennlinie auszuwählen sind. Es lassen sich aber auch andere, wie z. B. nichtlineare Ansätze vorgeben.

Bei entsprechender Auswahl der Koeffizienten lassen sich Sonderfälle vorgeben:

- $b_v = 0$ es ergibt sich eine druckkonstante Kennlinie, siehe Kurve A in Fig. 5,

- für entsprechend große $b_v$ und angepaßte $a_v$ lassen sich annähernd volumenkonstante Kennlinien erreichen, siehe Kurve B in Fig. 5.

Natürlich lassen sich keine Kennlinien außerhalb der maximalen (ungeregelten) Kennlinie, Kurve D in Fig. 5, realisieren.

Das System, bestehend aus Motor 2, Laufrad und Luftströmung, ist ein relativ träges System. Im Rahmen dieser Erfindung ist es daher ausreichend, wenn ein vorgegebener Punkt auf der Kennlinie erst in einem Zeitraum, der in der Größenordnung von Sekunden liegt, erreicht wird. Bei den folgenden Betrachtungen wird davon ausgegangen, daß dynamische Vorgänge vernachlässigbar sind.

**2. Motorkennlinie**

Zur Ermittlung des aktuellen Betriebspunktes $p_a$ des Gebläses 1 muß bekannt sein, mit welchem aktuellen Drehmoment $M_a$ und welcher aktuellen Drehzahl $n_a$ das Laufrad angetrieben wird. Dazu ist es zweckmäßig, siehe Fig. 3, vom aktuellen Zuleitungsstrom $I_b$ und dem Aussteuergrad $U_{ST}$ auf das aktuelle Drehmoment $M_a$ zu schließen. Der Verlauf $M_a (I_b, U_{ST})$ kann durch folgende Näherungsfunktion beschrieben werden:

$$M_a = a_{M5} + b_{M5} \cdot U_{ST} + c_{M5} \cdot I_b + d_{M5} \cdot U_{ST} \cdot I_b \tag{2}$$

In der Ausführungsform gemäß Fig. 4 kann vom aktuellen Motorstrom $I_a$ auf das Motormoment $M_a$ geschlossen werden. Der Verlauf $M_a (I_a)$ kann hierbei über eine der folgenden Näherungsfunktionen beschrieben werden:

$$M_a = a_{M2} + b_{M2} \cdot I_a \tag{2a}$$

$$M_a = a_{M3} + b_{M3} \cdot I_a + c_{M3} \cdot I_a^2 \tag{2b}$$

$$M_a = a_{M4} + b_{M4} \cdot I_a + c_{M4} \cdot I_a^2 + d_{M4} \cdot I_a^3 \tag{2c}$$

Die Konstanten $a_{M2}$ bis $d_{M5}$ sind motorspezifisch und für jeden Motortyp durch Drehmomentmessungen festzulegen. Diese Konstanten sind in entsprechenden Speichern des Gebläseregelmoduls 6 abgelegt.

**3. Gebläsekennlinie**

Das strömungstechnische Verhalten des Gebläses wird durch die $p(\dot{V})$-Kennlinie beschrieben (siehe Fig. 1). Unter der Annahme der Gültigkeit der Ähnlichkeitsgesetze läßt sich der Einfluß des Raddurchmessers D, der Drehzahl n und der als konstant angesehenen Luftdichte $\rho$ eliminieren, indem die dimensionslosen Kennzahlen Druckzahl $\Psi$, Volumenzahl $\varphi$ und Leistungszahl $\lambda$ eingeführt werden. Es gilt

$$\varphi = \frac{4 \cdot \dot{V}}{\pi^2 \cdot D^3 \cdot n} \tag{3}$$

$$\Psi = \frac{2 \cdot p}{\rho \cdot \pi^2 \cdot D^2 \cdot n^2} \tag{4}$$

$$\lambda = \frac{16 \cdot M}{\rho \cdot \pi^3 \cdot D^5 \cdot n^2} \tag{5}$$

Damit läßt sich das Gebläse 1 anstelle der dimensionsbehafteten $p(\dot{V})$-Kennlinie durch die dimensionslosen

Kennlinien $\Psi(\varphi)$ und $\lambda(\varphi)$ beschreiben. Punkte der Fig. 5 sind in der Fig. 6 dimensionslos dargestellt. Die in Fig. 5 auf Kurvenscharen liegenden Punkte liegen nun auf einer einzigen Kurve. Der Vorteil dieser Darstellung ist, daß der Verlauf dieser Kennlinien unabhängig von der Drehzahl, dem Raddurchmesser und der Luftdichte ist und sich damit das strömungstechnische Gebläseverhalten durch eine einzige Kennlinie entsprechend Fig. 6 darstellen läßt. Wenn die $\Psi(\varphi)$- und $\lambda(\varphi)$-Kennlinien bekannt sind, lassen sich durch Angabe von n, D und $\rho$ die dimensionsbehafteten Kennlinienwerte errechnen. Es ist zweckmäßig die $\Psi(\varphi)$- und $\lambda(\varphi)$-Verläufe mit quadratischen Funktionen anzunähern:

$$\Psi = a_p + b_p \cdot \varphi + c_p \cdot \varphi^2 \tag{6}$$

$$\lambda = a_L + b_L \cdot \varphi + c_L \cdot \varphi^2 \tag{7}$$

Die Konstanten $a_p, \ldots c_L$ sind gebläsespezifisch und durch Luftleistungsmessungen zu bestimmen. Diese Konstanten sind in entsprechenden Speichereinrichtungen des Gebläseregelmoduls 6 abgelegt.

### 4. Motorregelung

Die Realisierung eines Gebläses mit künstlicher Kennlinie läuft darauf hinaus, die Drehzahl des Gebläses abhängig von dem aktuellen Belastungszustand zu regeln. Dies wird durch 2 geschachtelte Schleifen realisiert, wie in Fig. 7 dargestellt. Auf die innere Schleife, die Erreichung und die Beibehaltung einer vorgegebenen Motordrehzahl, soll nicht näher eingegangen werden und kann mit den bekannten Ansätzen erreicht werden (PI bzw. PID-Regelung abgestimmt auf träge Regelkreise).

### 5. Ermittlung der Solldrehzahl

Im folgenden wird beschrieben, wie die Bestimmung der Solldrehzahl $n_s$ durchgeführt wird:

a) Die Vorgabewerte wie Koeffizienten der Sollkennlinie, Raddurchmesser D, Dichte $\rho$, Gebläsekoeffizienten und Motorkoeffizienten sind anzugeben.

b) Erfassung der aktuellen Drehzahl $n_a$.

c) Erfassung des aktuellen Motorstromes $I_a$ bzw. des Zuleitungsstromes $I_b$.

d) Berechnung des aktuellen Motorabgabedrehmomentes $M_a$ nach Gleichung (2), (2a), (2b) oder (2c).

e) Berechnung der aktuellen Leistungszahl nach Gleichung (5)

$$\lambda_a = \frac{16 \cdot M_a}{\rho \cdot \pi^3 \cdot D^5 \cdot n_a^2} \tag{8}$$

f) Berechnung der aktuellen Volumenzahl

$$\varphi_a = -\frac{b_L}{2 \cdot C_L} + \sqrt{\frac{b_L^2}{4 \cdot C_L^2} - \frac{a_L - \lambda_a}{C_L}} \tag{9}$$

g) Berechnung der aktuellen Druckzahl nach Gleichung (6)

$$\Psi_a = a_p + b_p \cdot \varphi_a + c_p \cdot \varphi_a^2 \tag{10}$$

h) Berechnung des aktuellen Volumenstromes mit Gleichung (3)

$$\dot{V}_a = \frac{1}{4} \cdot \varphi_a \cdot D^3 \cdot \pi^2 \cdot n_a \tag{11}$$

i) Berechnung der aktuellen Druckerhöhung mit Gleichung (4)

$$p_a = \frac{1}{2} \Psi_a \cdot \rho \cdot \pi^2 \cdot D^2 \cdot n_a^2 \tag{12}$$

j) Berechnung der neuen Druckerhöhung auf der vorgegebenen künstlichen Kennlinie

$$p_s = a_v + \frac{b_v^2 \cdot \dot{V}_a^2}{2 \cdot p_a} - \sqrt{(a_v + \frac{b_v^2 \cdot \dot{V}_a^2}{2 \cdot p_a})^2 - a_v^2} \tag{13}$$

k) Berechnung der neuen Drehzahl (der Solldrehzahl zur Erreichung der künstlichen Kennlinie)

$$n_s = n_a \cdot \sqrt{\frac{p_s}{p_a}} \tag{14}$$

Die Drehzahl $n_s$ ist die Solldrehzahl, die in der inneren Schleife, siehe Fig. 7, über einen bekannten Regelalgorithmus zu erreichen und beizubehalten ist. Nach einer vorgegebenen Anzahl von Schleifendurchläufen $m_i$ oder nach Ablauf einer vorgegebenen Zeit ist erneut die äußere Schleife abzuarbeiten.

Die vorliegende Erfindung ermöglicht es auch, die Steuerungskomponenten als separates Bauteil als Vorschaltgerät auszubilden. Dieses wird über eine vorgegebene Schnittstelle angeschlossen, die Ein- und Ausgänge für die Spannungsversorgung, für das Drehzahlausgangssignal und Steuereingangssignale aufweist, ohne daß in die vorhandene Motorelektronik des Gebläses eingegriffen werden muß. Es ist somit möglich, vorhandene, auf dem Markt vorhandene Gebläse mittels einer kostengünstigen, separat anzubringenden Vorschaltelektronik erfindungsgemäß nach einer künstlichen Kennlinie zu betreiben.

Weiterhin ist es möglich, den aktuellen Arbeitspunkt des Gebläses über eine geeignete Schnittstelle auszugeben und anzuzeigen, siehe Schnittstelle 22 in Fig. 3 und 4.

Somit ist es erfindungsgemäß möglich, allein durch die Messung von motorspezifischen Daten, wie des aktuellen Motorstromes $I_a$ oder Zuleitungsstromes $I_b$ und der aktuellen Motordrehzahl $n_a$, ohne zusätzliche Meßsonden für den Volumenstrom und/oder den Gebläsedruck innerhalb vorgegebener Grenzen, jede beliebige Gebläsekennlinie zu fahren, d. h. eine Drehzahlregelung derart vorzunehmen, daß jeder beliebige Gebläsezustand erreicht werden kann.

**Patentansprüche**

1. Gebläse, bestehend aus einem Gebläserad und einem dieses antreibenden elektrischen Motor (2) und einer Regeleinheit (3) zur Regelung der Motorleistung in Abhängigkeit von gebläsespezifischen Parametern, wobei ein einer Istdrehzahl ($n_a$) des Gebläses entsprechendes Istsignal gemessen und mit einem einer Solldrehzahl ($n_s$) entsprechenden Sollsignal verglichen wird und mittels der Regeleinheit (3) die Istdrehzahl ($n_a$) auf die Solldrehzahl ($n_s$) geregelt wird, wozu die Istdrehzahl ($n_a$) und der aktuelle Motorstrom ($I_a$) oder Zuleitungsstrom ($I_b$) gemessen und auf einen Mikrocontroller (4) als Eingangssignalgrößen geführt werden, wobei im Mikrocontroller (4) als Vorgabewerte die gebläsespezifischen Daten, wie Raddurchmesser, Dichte des Fördermediums, Gebläsekoeffizienten und Motorkoeffizienten sowie eine Gebläse-Sollkennlinie $p_s = f(\dot{V}_s)$ gespeichert sind, und im Mikrocontroller (4) das von den elektrischen Stromgrößen ($I_a$ bzw. $I_b$) und der Istdrehzahl ($n_a$) abhängige Solldrehzahlsignal ($n_s$) auf der Basis der vorgegebenen künstlichen Kennlinie $p_s = f(\dot{V}_s)$ erzeugt wird, mit $p_s$ = Sollbetriebsdruck und $\dot{V}_s$ = Sollvolumenstrom.

2. Gebläse nach Anspruch 1,
**dadurch gekennzeichnet, daß** für die künstliche Kennlinie eine Linearfunktion $p_s = f(\dot{V}_s)$ entsprechend $p_s = a + b \cdot \dot{V}_s$ verwendet wird, wobei a, b gebläsespezifische Konstanten sind.

3. Gebläse nach Anspruch 1 oder 2,
**dadurch gekennzeichnet, daß** im Mikrocontroller (4) ein Algorithmus gespeichert ist, der die Gebläsefunktion mittels dimensionsloser Kennlinien $\Psi(\varphi)$ und $\lambda(\varphi)$ beschreibt, und zwar entsprechend den Funktionen

$$\Psi = a_p + b_p \cdot \varphi + c_p \cdot \varphi^2$$

$$\lambda = a_L + b_L \cdot \varphi + c_L \cdot \varphi^2$$

wobei
$\varphi$ die Volumenzahl entsprechend

$$\varphi = \frac{4 \cdot \dot{V}}{\pi^2 \cdot D^3 \cdot n}$$

und $\Psi$ die Druckzahl entsprechend

$$\Psi = \frac{2 \cdot p}{\rho \cdot \pi^2 \cdot D^2 \cdot n^2}$$

und $\lambda$ die Leistungszahl entsprechend

$$\lambda = \frac{16 \cdot M}{\rho \cdot \pi^3 \cdot D^5 \cdot n^2}$$

sind, mit D = Raddurchmesser, n = Drehzahl und M = Drehmoment des Motors sowie p = Betriebsdruck (Druckerhöhung) sowie a .. c = gebläsespezifische Konstanten sind.

4. Gebläse nach einem der Ansprüche 1 bis 3, **dadurch gekennzeichnet, daß** das aktuelle Motordrehmoment ($M_a$) entsprechend einer der folgenden Näherungsfunktionen

$$M_a = a_{M2} + b_{M2} \cdot I_a$$

$$M_a = a_{M3} + b_{M3} \cdot I_a + c_{M3} \cdot I_a^2$$

$$M_a = a_{M4} + b_{M4} \cdot I_a + c_{M4} \cdot I_a^2 + d_{M4} \cdot I_a^3$$

von dem aktuellen Motorstrom ($I_a$) abhängt.

5. Gebläse nach einem der Ansprüche 1 bis 3, **dadurch gekennzeichnet, daß** das aktuelle Drehmoment ($M_a$) durch folgende Näherungsfunktion vom Zuleitungsstrom ($I_b$) und einem Aussteuergrad ($U_{ST}$) abhängt:

$$M_a = a_{M5} + b_{M5} \cdot U_{ST} + c_{M5} \cdot I_b + d_{M5} \cdot U_{ST} \cdot I_b$$

6. Gebläse nach einem der Ansprüche 1 bis 5, **dadurch gekennzeichnet, daß** die Solldrehzahl ($n_s$) entsprechend der Beziehung

$$n_s = n_a \cdot \sqrt[3]{\frac{p_s}{p_a}}$$

als Regelwert des Gebläses (1) zugeführt wird, wobei $n_a$ = aktuelle Drehzahl, $p_s$ die Soll-Druckerhöhung und $p_a$

die aktuelle Druckerhöhung sind.

7. Gebläse nach einem der Ansprüche 1 bis 6,
**dadurch gekennzeichnet, daß** die Regelung der Drehzahl des Gebläses (1) als PI oder PID-Regler ausgebildet ist.

8. Gebläse nach einem der Ansprüche 1 bis 7,
**dadurch gekennzeichnet, daß** die Regeleinheit (3) aus einer die Motorfunktion steuernden Kommutierungseinrichtung (5) und einem Gebläseregelmodul (6) besteht, wobei das Gebläseregelmodul (6) als separates Bauteil, der Kommutierungseinrichtung (5) vorgeschaltet ist.

9. Gebläse nach einem der Ansprüche 1 bis 8,
**dadurch gekennzeichnet, daß** über eine Schnittstelle (22) der aktuelle Arbeitspunkt des Gebläses (1) ausgegeben und angezeigt wird.

10. Gebläse nach einem der Ansprüche 1 bis 9,
**dadurch gekennzeichnet, daß** die vorgegebene künstliche Kennlinie $p_s = f(\dot{V}_s)$ dem Gebläseregelmodul (6) über eine Schnittstelle (15) zugeführt wird.

11. Gebläse nach einem der Ansprüche 1 bis 10,
**dadurch gekennzeichnet, daß** die künstliche Kennlinie $p_s = f(\dot{V}_s)$ im Gebläseregelmodul (6) in einer Speichereinheit (12) gespeichert wird.

**Claims**

1. Blower, comprising an impeller, an electric motor (2) driving the impeller, and a regulating unit (3) for regulating the motor output as a function of parameters specific to the blower, wherein an actual-value signal corresponding to the actual number of revolutions ($n_a$) of the blower is measured and is compared with a desired-value signal corresponding to a desired number of revolutions ($n_s$), and the actual number of revolutions ($n_a$) is regulated to the desired number of revolutions ($n_s$) by means of the regulating unit (3), for which purpose the actual number of revolutions ($n_a$) and the actual motor current ($I_a$) or supply-line current ($I_b$) are measured and are fed to a micro-controller (4) as input-signal variables, and wherein the data specific to the blower, such as impeller diameter, density of medium being fed, blower coefficients and motor coefficients plus a desired blower characteristic $p_s = f(\dot{V}_s)$ are stored in the micro-controller as presettings, and the signal for the desired number of revolutions ($n_s$), which signal is dependent on the electric current variables ($I_a$ or $I_b$) and the actual number of revolutions ($n_a$), is generated in the micro-controller (4) on the basis of the preset artificial characteristic $p_s = f(\dot{V}_s)$, where $p_s$ = desired operating pressure and $\dot{V}_s$ = desired volumetric flowrate.

2. Blower according to claim 1, **characterised in that** what is used for the artificial characteristic is a linear function $p_s = f(\dot{V}_s)$ corresponding to $p_s = a + b \cdot \dot{V}_s$, where a and b are constants specific to the blower.

3. Blower according to claim 1 or 2, **characterised in that**, stored in the micro-controller (4), there is an algorithm which defines the operation of the blower by means of dimensionless characteristics $\psi(\varphi)$ and $\lambda(\varphi)$ whose defining functions are

$$\psi = a_p + b_p \cdot \varphi + c_p \cdot \varphi^2$$

$$\lambda = a_L + b_L \cdot \varphi + c_L \cdot \varphi^2$$

where
$\varphi$ is the number for volume given by

$$\varphi = \frac{4 \cdot \dot{V}}{\pi^2 \cdot D^3 \cdot n}$$

$\psi$ is the number for pressure given by

$$\psi = \frac{2 \cdot p}{\rho \cdot \pi^2 \cdot D^2 \cdot n^2}$$

and $\lambda$ is the number for output given by

$$\lambda = \frac{16 \cdot M}{\rho \cdot \pi^3 \cdot D^5 \cdot n^2}$$

where D = impeller diameter, n = number of revolutions, M = torque of motor, p = operating pressure (increase in pressure) and a to c = constants specific to the blower.

4. Blower according to one of claims 1 to 3, **characterised in that** the actual motor torque ($M_a$) is a function of the actual motor current ($I_a$) in the manner defined by one of the following approximation functions

$$M_a = a_{M2} + b_{M2} \cdot I_a$$

$$M_a = a_{M3} + b_{M3} \cdot I_a + c_{M3} \cdot I_a^2$$

$$M_a = a_{M4} + b_{M4} \cdot I_a + c_{M4} \cdot I_a^2 + d_{M4} \cdot I_a^2.$$

5. Blower according to one of claims 1 to 3, **characterised in that** the actual torque ($M_a$) is a function of the supply line current ($I_b$) and of a control factor ($U_{ST}$) in the manner defined by the following approximation function:

$$M_a = a_{M5} + b_{M5} \cdot U_{ST} + c_{M5} \cdot I_b + d_{M5} \cdot U_{ST} \cdot I_b.$$

6. Blower according to one of claims 1 to 5, **characterised in that** the desired number of revolutions ($n_s$), as defined by the equation

$$n_s = n_a \cdot \sqrt{\frac{p_s}{p_a}}$$

where $n_a$ is the actual number of revolutions, $p_s$ is the desired increase in pressure and $p_a$ is the actual increase in pressure, is fed as a regulating value for the blower (1).

7. Blower according to one of claims 1 to 6, **characterised in that** the means for regulating the number of revolutions of the blower (1) is in the form of a PI or PID regulator.

8. Blower according to one of claims 1 to 7, **characterised in that** the regulating unit (3) comprises a commutating means (5) which controls the operation of the motor, and a blower regulating module (6), the blower regulating module (6) being a separate component which is connected upstream of the commutating means (5).

9. Blower according to one of claims 1 to 8, **characterised in that** the actual operating point of the blower (1) is output and indicated by means of an interface (22).

10. Blower according to one of claims 1 to 9, **characterised in that** the preset artificial characteristic $p_s = f(\dot{V}_s)$ is fed to the blower regulating module (6) via an interface (15).

11. Blower according to one of claims 1 to 10, **characterised in that** the preset artificial characteristic $p_s = f(\dot{V}_s)$ is stored in the blower regulating module (6) in a memory unit (12).

**Revendications**

1. Soufflante, comprenant une roue de soufflante et un moteur électrique (2) entraînant celle-ci et une unité de régulation (3) destinée à réguler la puissance du moteur en fonction de paramètres spécifiques à la soufflante, un signal réel qui correspond à une vitesse de rotation réelle ($n_a$) de la soufflante étant mesuré et comparé à un signal exigé qui correspond à une vitesse de rotation exigée ($n_s$) et la vitesse de rotation réelle ($n_a$) étant régulée à la vitesse de rotation exigée ($n_s$) au moyen de l'unité de régulation (3), la vitesse de rotation réelle ($n_a$) et le courant de moteur réel ($I_a$) ou le courant d'alimentation ($I_b$) étant mesurés et amenés à cet effet en tant que grandeurs de signal d'entrée à un microcontrôleur (4), les caractéristiques spécifiques à la soufflante, telles que le diamètre de la roue, la densité du fluide transporté, les coefficients de soufflante et les coefficients de moteur, ainsi qu'une courbe caractéristique exigée de la soufflante $p_s = f(V_s)$, étant enregistrées dans le microcontrôleur (4) en tant que grandeurs de référence, et le signal de vitesse de rotation exigé ($n_s$) qui dépend des intensités électriques ($I_a$ ou $I_b$) et de la vitesse de rotation réelle étant produit dans le microcontrôleur (4) sur la base de la courbe caractéristique fictive $p_s = f(V_s)$ prédéterminée, avec $p_s$ = pression de service exigée et $V_s$ = débit volumétrique exigé.

2. Soufflante selon la revendication 1, **caractérisée en ce qu'**on utilise, pour la courbe caractéristique fictive, une fonction linéaire $p_s = f(V_s)$ correspondant à $p_s = a + b \cdot V_s$, a et b étant des constantes spécifiques à la soufflante.

3. Soufflante selon la revendication 1 ou 2, **caractérisée en ce qu'**un algorithme mis en mémoire dans le microcontrôleur (4) décrit le fonctionnement de la soufflante au moyen de courbes caractéristiques sans dimension, suivant les fonctions suivantes

$$\Psi = a_p + b_p \cdot \varphi + c_p \cdot \varphi^2$$

$$\lambda = a_L + b_L \cdot \varphi + c_L \cdot \varphi^2$$

$\varphi$ étant le coefficient volumique correspondant à

$$\varphi = \frac{4 \cdot V}{\pi^2 \cdot D^3 \cdot n}$$

et $\psi$ le coefficient de pression correspondant à

$$\psi = \frac{2 \cdot p}{p \cdot \pi^2 \cdot D^2 \cdot n^2}$$

et $\lambda$ le coefficient de puissance correspondant à

$$\lambda = \frac{16 \cdot M}{p \cdot \pi^3 \cdot D^5 \cdot n^2}$$

dans lesquelles D = diamètre de roue, n = vitesse de rotation et M = couple de rotation du moteur, ainsi que p = pression de service (augmentation de pression) ainsi que a ... c = constantes spécifiques à la soufflante.

4. Soufflante selon l'une quelconques des revendications 1 à 3, **caractérisée en ce que** le couple de rotation réel du moteur ($M_a$) dépend de l'intensité réelle du moteur ($I_a$) suivant l'une des fonctions d'approximation suivantes

$$M_a = a_{M2} + b_{M2} \cdot I_a$$

$$M_a = a_{M3} + b_{M3} \cdot I_a + c_{M3} \cdot I_a^2$$

$$M_a = a_{M4} + b_{M4} \cdot I_a + c_{M4} \cdot I_a{}^2 + d_{M4} \cdot I_a{}^3$$

**5.** Soufflante selon l'une quelconque des revendications 1 à 3, **caractérisée en ce que** le couple de rotation réel ($M_a$) dépend du courant d'alimentation ($I_b$) et d'un coefficient de réglage ($U_{ST}$) par la fonction d'approximation suivante :

$$M_a = a_{M5} + b_{M5} \cdot U_{ST} + c_{M5} \cdot I_b + d_{M5} \cdot U_{ST} \cdot I_b$$

**6.** Soufflante selon l'une quelconque des revendications 1 à 5, **caractérisée en ce que** la vitesse de rotation exigée ($n_s$) est amenée en tant que grandeur de régulation de la soufflante (1) suivant la relation

$$n_s = n_a \sqrt{\frac{P_s}{P_a}}$$

dans laquelle $n_a$ est la vitesse de rotation réelle, $p_s$ l'élévation de pression exigée et $p_a$ l'élévation de pression réelle.

**7.** Soufflante selon l'une quelconque des revendications 1 à 6, **caractérisée en ce que** la régulation de la vitesse de rotation de la soufflante (1) est prévue comme un régulateur PI ou PID.

**8.** Soufflante selon l'une quelconque des revendications 1 à 7, **caractérisée en ce que** l'unité de régulation (3) est constituée d'un dispositif de commutation (5) commandant le fonctionnement du moteur et d'un module de régulation de la soufflante (6), le module de régulation de la soufflante (6) étant monté comme un élément séparé en amont du dispositif de commutation (5).

**9.** Soufflante selon l'une quelconque des revendications 1 à 8, **caractérisée en ce que** le point de travail actuel de la soufflante (1) est délivré et affiché par l'intermédiaire d'une interface (22).

**10.** Soufflante selon l'une quelconque des revendications 1 à 9, **caractérisée en ce que** la courbe caractéristique fictive prédéterminée $p_s = f(V_s)$ est amenée au module de régulation de la soufflante (6) par l'intermédiaire d'une interface (15).

**11.** Soufflante selon l'une quelconque des revendications 1 à 10, **caractérisée en ce que** la courbe caractéristique fictive $p_s = f(V_s)$ est mise en mémoire dans une unité de mémoire (12) dans le module de régulation de la soufflante (6).

$f(\dot{V}, n, D, \rho)$

Fig.1

$n(D, \rho)$

$n_1$  $n_2$  $n_3$

$p$

$\dot{V}$

Fig.2

Fig.3

Fig.4

Fig.5

Fig.6

Fig.7